Europäisches Patentamt

European Patent Office

Office européen des brevets

(19)

(11) **EP 1 181 525 B1**

(12) ## EUROPÄISCHE PATENTSCHRIFT

(45) Veröffentlichungstag und Bekanntmachung des Hinweises auf die Patenterteilung:
**16.07.2003 Patentblatt 2003/29**

(21) Anmeldenummer: **00984953.0**

(22) Anmeldetag: **03.11.2000**

(51) Int Cl.$^7$: **G01N 15/14**

(86) Internationale Anmeldenummer:
**PCT/EP00/10833**

(87) Internationale Veröffentlichungsnummer:
**WO 01/036939 (25.05.2001 Gazette 2001/21)**

(54) **VERFAHREN ZUR AUTOMATISCHEN ANALYSE VON MIKROSKOPAUFNAHMEN**

METHOD FOR THE AUTOMATIC ANALYSIS OF MICROSCOPE IMAGES

PROCEDE POUR L'ANALYSE AUTOMATIQUE D'IMAGES MICROSCOPIQUES

(84) Benannte Vertragsstaaten:
**AT BE CH CY DE DK ES FI FR GB GR IE IT LI LU MC NL PT SE TR**

(30) Priorität: **04.11.1999 DE 19953181**

(43) Veröffentlichungstag der Anmeldung:
**27.02.2002 Patentblatt 2002/09**

(73) Patentinhaber: **Meltec Multi-Epitope-Ligand-Technologies GmbH 39120 Magdeburg (DE)**

(72) Erfinder:
• **NATTKEMPER, Tim, Wilhelm 33619 Bielefeld (DE)**
• **RITTER, Helge 33617 Bielefeld (DE)**
• **SCHUBERT, Walter 39175 Biederitz (DE)**

(74) Vertreter: **Hofstetter, Alfons J., Dr.rer.nat. et al Hofstetter, Schurack & Skora Balanstrasse 57 81541 München (DE)**

(56) Entgegenhaltungen:
**WO-A-97/37327     GB-A- 2 320 352**
**US-A- 5 181 259     US-A- 5 245 672**
**US-A- 5 287 272     US-A- 5 741 648**

**Beschreibung**

Die vorliegende Erfindung betrifft ein Verfahren zur automatischen Analyse von Mikroskopaufnahmen von biologischen Objekten, insbesondere zur Analyse von Fluoreszenzaufnahmen von Zellen.

In der modernen biomedizinischen Forschung werden in zahlreichen Experimenten unter anderem Fluoreszenztechniken zur Markierung verwandt, um biologisch signifikante Objekte unter dem Mikroskop sichtbar zu machen. Bei den Objekten kann es sich beispielsweise um Zellen eines bestimmten Typs oder in einem bestimmten Zustand handeln. Durch Fortschritte in der Automation solcher Experimente ist es in den letzten Jahren für biomedizinische Labors möglich geworden, große Mengen derartiger bildgebender Experimente vollautomatisch durchzuführen.

So wird in der DE 197 09 348 C1 eine Fluoreszenz-Mikroskoptechnik beschrieben, die einen Satz von n Bildern einer einzelnen Probe liefert, indem die Probe mit Lymphozyten mit n verschiedenen Fluorochrommarkem präpariert wurde. In jedem Bild fluoreszieren andere Untergruppen der Lymphozyten und erscheinen mit leuchtenden Abgrenzungen. Jeder Lymphozyt in der Probe hat in dem Satz von Bildern sein spezifisches Fluoreszenzverhalten. Er fluoresziert in einer Untergruppe von Bildern und ist in dem Rest des Bildersatzes nicht sichtbar.

Um die Fluoreszenzmuster aus dem Bildersatz zu extrahieren, müssen zunächst die fluoreszierenden Lymphozyten in den n Bildern detektiert werden. Die fluorochrommarkierten Lymphozyten unterscheiden sich hinsichtlich ihrer Anzahl, Lokation und Intensität. Da so große Mengen an Bildern und Bilddaten anfallen, aus denen zuerst die Informationen gelesen werden müssen, um diese dann biologisch zu interpretieren, entsteht ein sog. "Flaschenhals" in der Auswertung der Experimente. Eine Bildinterpretation durch menschliche Angestellte ist nicht durchführbar, da sie zu zeitaufwendig ist und ihre Ergebnisse häufig unzuverlässig sind. Die Ursache hierfür liegt in der ermüdenden visuellen Auswertungsarbeit, die mit einem Konzentrationsverlust schon nach kurzer Zeit einhergeht. Zudem unterscheiden sich die zu detektierenden Objekte hinsichtlich ihrer Anzahl, Lokation und Intensität. Daher schwanken Bildparameter wie Kontrast und Rauschen von Bild zu Bild. Außerdem weisen die Objekte, wie z. B. Zellen in Gewebeproben erhebliche Variationen hinsichtlich ihrer Form und Größe auf.

Es besteht so die Notwendigkeit von automatischen Auswertungsverfahren, welche in einem Bild die zu detektierenden Objekte lokalisieren.

Frühere Arbeiten zur Automatisierung der Zelldetektion richten ihr Augenmerk im wesentlichen auf modellbasierte Ansätze. Unter diesen findet sich auch die Idee, ein geometrisches Modell auf ein Gradientenensemble anzupassen (Mardia et al., 1997, In: IEEE Transactions on Pattern Analysis and Machine Intelligence, 19: 1035-1042). Dazu zählt auch die Nutzung der Wellenpropagation (Hanahara und Hiyane, 1990, In: Machine Visions and Applications, 3: 97-111) oder einer Hough-Transformation, um zirkuläre Objekte zu detektieren (Gerig und Klein, 1986, In: Proc. Int. Conf. on Pattern Recognition, 8: 498-500). Diese Ansätze sind jedoch nachteiligerweise häufig sensitiv gegenüber Veränderungen der Form des Objekts und lassen sich von Laien nicht ohne weiteres anpassen. Ferner sind die Bilder aufgrund heterogener Beleuchtungsbedingungen nicht selten verrauscht, und die Zellen sind teilweise verdeckt, was eine Detektion durch Randgrenzenabtastung ungeeignet macht (Galbraith et al.; 1991, In: Cytometry, 12: 579-596).

Das Dokument US-A-5 287 272 offenbart ein Verfahren zur automatischen Analyse von Mikroskopaufnahmen von biologischen Objekten, wobei das Verfahren folgende Schritte umfasst:

- Aufnahme von einem Mikroskopbild einer Probe mit einer Vielzahl von biologischen Objekten;
- Markierung der Position von Masseschwerpunkten einer Anzahl n der einzelnen in dem Mikroskopbild erkennbaren Objekte, wobei jedem Markierten Objekt ein definierter Bildausschnitt zugeordnet wird, der das markierte Objekt vollständig umgibt;
- Herstellung eines Trainingssets mit Bildausschnitten von Proben, deren charakteristischen Merkmale und/oder Merkmalskombinationen bekannt sind, und Zuordnung jedes Bildausschnittes zu einem Klassifikationswert zwischen 0 und 1;
- automatische Ermittlung von Klassifikationswerten von allen Bildausschnitten des aufgenommenen Mikroskopbildes mittels eines Vergleichs der Bilddaten der Bildausschnitten des aufgenommenen Mikroskopbildes mit den Merkmalen und/oder Merkmalskombinationen der Bildausschnitte des Trainingssets; und
- Klassifizierung der biologischen Objekte in dem aufgenommenen Mikroskopbild durch Auswertung der ermittelten Klassifikationswerte, wobei die ermittelten Klassifikationswerte mit einem vorgegebenen Schwellenwert verglichen werden.

Es ist daher Aufgabe der vorliegenden Erfindung, ein Verfahren der eingangs genannten Art bereitzustellen, welches ein einfaches automatisiertes, schnelles und leicht zu adaptierendes Detektionsverfahren von Zellen bereitstellt.

Gelöst wird diese Aufgabe durch ein Verfahren mit den Merkmalen des Anspruchs 1.

Vorteilhafte Ausgestaltungen sind in den Unteransprüchen beschrieben.

Die vorliegende Erfindung betrifft ein Verfahren zur automatischen Analyse von Mikroskopaufnahmen von biologischen Objekten, insbesondere zur Analyse von Fluoreszenzaufnahmen von Zellen, wobei das Verfahren folgende Schritte umfasst: (a) Aufnahme von mindestens zwei Mikroskopbildem einer Probe mit einer Vielzahl von biologischen Objekten; (b) Auswahl eines ersten Mikroskopbildes und Markierung der Position von Masseschwerpunkten einer Anzahl n der einzelnen in dem ersten Mikroskopbild erkennbaren Objekte, wobei jedem markierten Objekt ein definierter erster Bildausschnitt zugeordnet wird, der das markierte Objekt jeweils vollständig umgibt und wobei jedem ersten Bildausschnitt mit einem markierten Objekt der Wert 1 zugeordnet wird und die Anzahl n von derart markierten ersten Bildausschnitten ein positives Trainingsset ergibt; (c) Auswahl und Markierung einer Anzahl m von zweiten Bildausschnitten, die zu den ersten Bildausschnitten jeweils einen vorbestimmten Mindestabstand einhalten, wobei die Größe und Form eines zweiten Bildausschnitts der Größe und Form des ersten Bildausschnitts entspricht und wobei jedem zweiten Bildausschnitt der Wert 0 zugeordnet wird und die Anzahl m von derart markierten zweiten Bildausschnitten ein negatives Trainingsset ergibt; (d) Ermittlung charakteristischer Merkmale und/oder Merkmalskombinationen des positiven und negativen Trainingssets und Zuordnung zu einem Klassifikationswert zwischen 0 und 1, wobei der Klassifikationswert den Grad der Wahrscheinlichkeit des Vorhandenseins eines markierten Objekts repräsentiert, und Speicherung der ermittelten Merkmale und/oder Merkmalskombinationen; (e) Automatische Ermittelung von Klassifikationswerten von allen Bildpunkten des zweiten und jedes weiteren Mikroskopbildes mittels eines Vergleichs der Bilddaten des zweiten und jeden weiteren Mikroskopbildes mit den in Verfahrensschritt (d) ermittelten Merkmalen und/oder Merkmalskombinationen, wobei für jeden Bildpunkt des zweiten und jedes weiteren Mikroskopbildes der Klassifikationswert für einen den Bildpunkt umgebenden Bildausschnitt ermittelt wird und die Größe und Form dieses Bildausschnitts der Größe und Form des ersten oder zweiten Bildausschnitts entspricht; und (f) Erkennung der Position von biologischen Objekten in dem zweiten oder jedem weiteren Mikroskopbild durch Auswertung der ermittelten Klassifikationswerte, wobei die ermittelten Klassifikationswerte mit einem vorgegebenen Schwellenwert verglichen werden, der das Vorhandensein eines biologischen Objekts repräsentiert.

Das erfindungsgemäße Verfahren zur Detektion von biologischen Objekten wie beispielsweise Zellen in Mikroskopbildern arbeitet mit Klassifikationswerten, die Bildausschnitten fester Größe und Form einen Wert zwischen 0 und 1 zuordnen und die wiedergeben, ob in diesem Bildausschnitt ein biologisches Objekt zu sehen ist (1) oder nicht (0). In einem Bild werden alle Zellen gefunden indem alle Bildbereiche einem Klassifikationswert zugeordnet werden. Durch eine einfache automatische Suche nach hohen Werten (Schwellwertanalyse) können so die Positionen der biologischen Objekte automatisch lokalisiert werden und beispielsweise in einer Datei gespeichert und weiterverarbeitet werden. Das Bereitstellen solcher Klassifikationswerte bzw. eines entsprechenden Klassifikators und deren einfache Adaption im Falle von signifikanten Veränderungen der Mikroskopbilder durch Modifikationen am Mikroskop, andere Proben, andere Fluoreszenzmarker oder andere Zelltypen wird durch die Verwendung des erfindungsgemäßen Verfahrens, welches ein künstliches neuronales Netz darstellt, ermöglicht.

Das erfindungsgemäße Verfahren detektiert biologische Objekte wie beispielsweise Zellen in Mikroskopbildem vollautomatisch, nachdem es von einem Benutzer trainiert wird, durch Versorgung mit einer Menge von Zell-positiven Bildausschnitten. Die Handhabung ist besonders bequem, da der Benutzer zum Trainieren nur Zellen auf dem Bildschirm markieren muss, was er in der sonstigen Labortätigkeit in Routine tut. Das System eignet sich insofern zur schnellen Auswertung vieler Mikroskopbilder bezüglich einer Lokalisierung von Zellen. Das erfindungsgemäße Verfahren ist auf Grund seiner Handhabbarkeit sehr einfach zu bedienen und auszuführen. Es eignet sich zur Unterstützung jeder Art empirischer Arbeit mit Mikroskopbildern von biologischen Objekten im Hochschul- wie auch Industriebereich, in welchem der Durchsatz an Proben groß ist und eine objektive und reproduzierbare Auswertung notwendig ist.

In einer vorteilhaften Ausgestaltung des erfindungsgemäßen Verfahrens ist die Probe eine Gewebeprobe und das biologische Objekt eine Zelle. Es hat sich herausgestellt, daß das Verfahren insbesondere bei der automatischen Zelldetektion Vorteile gegenüber herkömmlichen bekannten Verfahren aufweist.

In einer weiteren vorteilhaften Ausgestaltung des erfindungsgemäßen Verfahrens werden die zu ermittelnden biologischen Objekte vor der Aufnahme der Mikroskopbilder mit einem oder mehreren chemischen Markem markiert. Dabei kann zwischen der Aufnahme der einzelnen Mikroskopbilder ein Bleich- oder Waschvorgang durchgeführt werden. Die chemischen Marker können Fluorochrommarker und die Mikroskopbilder Fluoreszenzaufnahmen sein.

Beispielsweise werden Fluorochrommarker auf Lymphozyten benutzt, um das Vorhandensein von Proteinen in der Zelloberfläche von Lymphozyten zu ermitteln. Jeder Marker bindet an eine Untergruppe der Lymphozyten, die von der Existenz des entsprechenden Proteins in der Lymphozytenoberflächenmembran abhängig ist. Durch Fluoreszenzanregung treten die sich bindenden Lymphozyten mit hohen Intensitäten auf. Ein entsprechendes Mikroskopbild wird von einer CCD-Kamera aufgenommen. Danach wird der Marker mittels Bleiche von den Zellen entfernt und der Vorgang wird unter Verwendung eines anderen Markers wiederholt. In dem hier beschriebenen Ausführungsbeispiel kann der das Markieren, die Bilderzeugung und das Bleichen umfassende Vorgang mit bis zu neun Markern wiederholt werden. Während jeder Wiederholung bleiben die Positionen der Lymphozyten unverändert, wodurch ein Matching oder Übereinstimmungsabgleich der Positionen zwischen den verschiedenen Bildern ermöglicht wird. In diesem experimentellen Setup werden insbesondere T-Lymphozyten analysiert, die bei einem klinischen Fall einer Sarkoidose in das Muskelgewebe eingewandert sind. Die Lymphozyten sind mit n=7 Markem präpariert worden und es wurden sieben Fluoreszenzaufnahmen gemacht, wobei verschiedene Untergruppen der Zellen durch Fluoreszenz in Erscheinung traten. Nach Abschluss aller n Schritte kann ein Satz von n Mikroskopbildern mit verschiedenen Lymphozyten-Untergruppen ausgewertet werden. Die Auswertung der n Mikroskopbilder erfolgt mit dem erfindungsgemäßen Verfahren.

Dabei ist beispielsweise die Anzahl n der einzelnen in dem Verfahrensschritt b) markierten biologischen Objekte, insbesondere Zellen, größer oder gleich 50. Für jeden markierten Punkt wird dabei entschieden, ob dieser Punkt ein Zentrum einer Zelle ist oder nicht. Da sich die beispielsweise Lymphozyten während einer Invasionssituation in organischem Fasermaterial befinden, ist ihre Form nicht zirkulär, sondern unregelmäßig länglich, und wird als vorwiegend konvex bezeichnet. Zur Klassifikation der biologischen Objekte wird eine besondere Form eines neuronalen Netzes, die sogenannte "**L**ocal **L**inear **M**ap" verwendet (LLM) (Ritter, 1991, In: Artifical Neural Networks, Elsevier Science Publishers B.V.). Der LLM-Klassifikator wird durch einen Satz von Bildausschnitten trainiert, die Zellen enthalten. Zum Trainieren des LLM-Klassifikators wird gemäß dem Verfahrensschritt b) ein Bild aus dem Bildersatz ausgewählt. Des weiteren werden z.B. mittels einer Computermaus eine Gruppe fluoreszierender Zellen markiert. Die Gruppe von N x N großen Bildausschnitten um diese Zellen herum ergibt den Satz positiver Trainingsbeispiele bzw. ein positives Trainingsset. Der erste Bildausschnitt ist gemäß einer vorteilhaften Ausgestaltung des erfindungsgemäßen Verfahrens quadratisch ausgebildet, wobei die Größe N x N bzw. die Seitenlänge N des ersten Bildausschnitts mindestens dem maximalen Durchmesser der biologischen Objekte im ersten Mikroskopbild entspricht.

Ein weiterer Satz von zweiten Bildausschnitten wird gemäß dem Verfahrensschritt c) vollautomatisch beliebig aus demselben Bild ausgewählt, wobei ein Mindestabstand von beispielsweise 3 - 5 Pixeln zu den bereits markierten ersten Bildausschnitten eingehalten wird. Dieser zweite Satz stellt den Satz negativer Trainingsbeispielausschnitte bzw. ein negatives Trainingsset dar. Die Anzahl m von zweiten Bildausschnitten ist gemäß einer vorteilhaften Ausgestaltung des erfindungsgemäßen Verfahrens größer oder gleich 50, wobei die zweiten Bildausschnitte automatisch unter Berücksichtigung des Mindestabstands zu den jeweiligen ersten Bildausschnitten definiert werden.

In einem Ausführungsbeispiel wird für jeden Trainingsbeispielausschnitt ein $d_{in}$-dimensionaler Merkmalsvektor x berechnet. Der Satz der selektierten Bildausschnitte wird einer Principal-Component-Analyse (PCA) unterzogen. Dies ist eine bekannte Technik bei Klassifikationsaufgaben in der Computervision. Die grundlegende Idee der PCA ist, dass der hochdimensionale Bildausschnitt hierbei in einen wesentlich geringerdimensionalen ($d_{in}$ = ca. 6) Merkmalsraum abgebildet wird. Diese Merkmale ergeben sogenannte Eingangs-Merkmalsvektoren **x**. Die Merkmalsvektoren haben einen deutlich geringeren Datenumfang als die Bildausschnitte selbst. Aus der Berechnung der Merkmalsvektoren für die positiven und negativen Eingangsbeispiele ergibt sich das Trainingsset des (Eingang, Ausgang)-Paares

$$\Gamma = \{(x_\alpha, y_\alpha)\}_\alpha.$$

Für das positive Trainingsset wird $y_\alpha$ gleich 1 gesetzt, und gleich 0 für die negativen.

Die LLM ist gegeben durch

$$\{w_i^{in} \in R^d_{in}, w_j^{out} \in R^d_{out}; A_i \in R^d_{in}x^d_{out}, i = 1..I\}.$$

Ein Tripel $v_i = (w_i^{in}, w_i^{out}, A_i)$ wird als Knoten bezeichnet. Für ein Training der LLM wird ein Paar ($x_\alpha, y_\alpha$) beliebig aus $\Gamma$ selektiert, und die Lernregeln

$$\Delta w_k^{in} = \in^{in(x_\alpha - w_k^{in})} \qquad (1)$$

$$\Delta w_k^{out} = \in^{out(y_\alpha - y(x_\alpha))} + A_k \Delta w_k^{in} \qquad (2)$$

$$\Delta A_k = \in^A (y_\alpha - y(x_\alpha)) \frac{(x_\alpha - w_k^{in})^T}{||x_\alpha - w_k^{in}||^2} \qquad (3)$$

werden ausgeführt. $\in^{in}, \in^{out}, \in^A \subset ]0, 1[$ sind absteigende Lernschrittgrößen und K gilt für $\kappa = arg\ min_\kappa \{||x-w_k^{in}||\}$. Daher ist $w_k^{in}$ der nächste Nachbar zum Eingang x. Dies wird I * 10000 mal wiederholt.

Der trainierte LLM-Klassifikator führt eine Abbildung von Fluoreszenzbildpunkten auf Klassifikations- oder Evidenzwerte in (0;1) durch. Um den Klassifikationswert für beispielsweise eine fluoreszierende Zelle an einem Bildpunkt zu berechnen, wird der Merkmalsvektor x für dessen Umgebungsregion berechnet. Der LLM-Ausgang für den Eingangs x berechnet sich durch

$$y(x) = w_k^{out} + A_k(x - w_k^{in}) \qquad (4)$$

wobei

$$k = arg\ min_k\{||x - w_k^{in}||\}.$$

In dem beschriebenen Ausführungsbeispiel beträgt die Anzahl der Knoten I=5 und die Bildausschnittgröße ist N=15 Pixel.

Um alle biologischen Objekte, wie z.B. fluoreszierenden Zellen in dem zweiten oder jedem weiteren Bild des Bildersatzes zu detektieren, wird jeder Bildpunkt durch (4) auf seinen Klassifikationswert abgebildet. Die umgebende Bildregion des Punktes wird an den Klassifikator gegeben, der deren Klassifikationswert berechnet. Durch Berechnung der Klassifikationswerte für jeden Punkt in einem Bild entsteht eine sogenannte Klassifikations- oder Evidenzabbildung des Bildes. Regionen mit hohen Klassifikationswerten oder Evidenzen weisen auf biologische Objekte wie z.B. fluoreszierende Zellen in dem korrespondierenden Fluoreszenzbild hin. Alle Punkte mit einem Klassifikationswert größer als z. B. 0,5 und ohne größere Evidenzen in ihrer Nachbarschaft bilden die Gruppe von Positionen biologischer Objekte wie fluoreszierende Zellen in dem Bild. Entsprechend wird bei allen weiteren Mikroskopbildem des Bildersatzes vorgegangen.

Die automatische Ermittelung von Klassifikationswerten von allen Bildpunkten des zweiten und jedes weiteren Mikroskopbildes gemäß Verfahrensschritt e) erfolgt gemäß einer vorteilhaften Ausgestaltung der Erfindung durch ein Scannen der Bildfläche des zweiten und jedes weiteren Mikroskopbildes.

In einer weiteren vorteilhaften Ausgestaltung des erfindungsgemäßen Verfahrens werden die durch die Verfahrensschritte a) bis f) ermittelten Objektpositionen in der Gesamtzahl der Mikroskopbilder verglichen, so daß sich eine räumliche Lagebestimmung und Verteilung der Einzelobjekte in der Probe ergibt.

So können beispielsweise Fluoreszenzmuster von Zellen ermittelt werden. Dabei werden nach dem Vorgang der Zelldetektion in allen Bildern lokal korrespondierende Fluoreszenzstellen in verschiedenen Bildern gefunden, um Fluoreszenzen derselben Zelle auf ihr Markerkombinationsmuster abzubilden. Diese Korrespondenzanalyse beruht ausschließlich auf den Positionen der Zellen in den Bildern und stellt eine schwierige Aufgabe dar, da die ermittelten Positionen ein und derselben Zelle in verschiedenen Bildern nicht immer exakt gleich sind. Außerdem variiert die Anzahl fluoreszierender Zellen in den Bildern stark. Beide Aspekte machen ein einfaches Matching auf der Grundlage lediglich der detektierten Zellpositionen unmöglich. Mit dem erfindungsgemäßen Verfahren werden derartige Probleme vermieden, indem die Klassifikationswerte bzw. Evidenzen aller Bilder des Satzes von Bildern ausgewertet werden.

Indem die Klassifikationswerte bzw. Evidenzen aller n Bilder wie voranstehend beschrieben ermittelt werden, ergeben sich n Klassifikations- bzw. Evidenzwerte für jeden Punkt. Dann wird für jeden Punkt der Maximalevidenzwert selektiert und an seinen Koordinaten in eine neue Evidenzabbildung eingetragen. Diese Abbildung wird als "Master Evidence Map" bezeichnet, da jedes biologische Objekt wie beispielsweise eine Zelle, das in wenigstens einem der Bilder auftrat, in dieser Abbildung durch einen hohen Evidenzwert repräsentiert wird. Durch Anwendung des Verfahrensschritts f) auf die "Master Evidence Map" ergeben sich alle Positionen der biologischen Objekte. Dieses Set von M Zellpositionen $\{(x_i,y_i)\}$ wird als "Masterset" bezeichnet. Anschließend werden für jedes biologische Objekt aus dem "Masterset" die binären Fluoreszenzwerte $f_j(i)$ gesammelt. $f_j$ von $p_i = (f_1^{(i)}, ...., f_n^{(i)})$ wird auf 1 gesetzt, wenn ein biologisches Objekt wie z.B. eine Zelle im j-ten Fluoreszenzbild des Bildersatzes in enger Nachbarschaft zu ihren Koordinaten $(x_i,y_i)$ detektiert wurde. Eine einfache lokale Matchingprozedur zwischen dem Masterset und den Klassifikationswerten der für alle Fluoreszenzbilder detektierten Positionen der biologischen Objekte bzw. Zellpositionen ergibt die binären Fluoreszenzmuster aller detektierter Objekte bzw. Zellen.

Eine erfindungsgemäße Verwendung des beschriebenen neuen Verfahrens zur automatischen Analyse von Mikroskopaufnahmen von biologischen Objekten ist die automatisierte Zellklassifikation von fluoreszierenden Zellen. So wurde beispielsweise ein Satz von sieben Fluoreszenzbildem gemäß dem erfindungsgemäßen Verfahren aufgenommen. Die sieben verschiedenen Marker sind cd2, cd3, cd4, cd8, cd11b, cd19 und cd26; diese sind bei der Fluoreszenzmikroskopie übliche Antikörper-Marker. Das Trainingsset aller Zellausschnitte wurde von Hand selektiert, und zwar aus dem cd4-Bild. In jedem Bild wurden fluoreszierende Zellen mit Hilfe des LLM-Klassifikators detektiert. Mit Hilfe der Maximalbedingung der Klassifikationswerte bzw. Evidenzen, die von der LLM errechnet wurden, wurde die "Master Evidence Map" erzeugt. Von der "Master Evidence Map" wurden die Positionen von M = 550 fluoreszierenden Zellen extrahiert. Schließlich ergab der Schritt des lokalen Matchings die Markerkombinationsmuster pj, j = 1, ..., 550.

Zur Betrachtung der Verteilung der Markerkombinationsmuster innerhalb der Gruppe von Lymphozyten wurden deren binäre Muster $(f_1^{(i)}, ...., f_7^{(i)})$ durch eine einfache Abbildung vom dualen System in das Dezimalsystem auf ein numerisches Label abgebildet. Die Häufigkeiten der Muster wurden gezählt und in einem Histogramm dargestellt (Histogramm von $2^7 = 128$ Balken). Dabei ergibt sich, dass nur 24 von 128 möglichen Mustern in der gesamten Gruppe von Lymphozyten gefunden wurden. Es dominieren drei Muster der Anzahl nach, (1000000) (= 1), (0010000) (=8) und (1010000) (=9). Dies sind Zellen, die sich nur an cd2 oder an cd4 oder nur an beide banden. Die übrigen Häufigkeiten liegen unter 30.

Um einen Eindruck hinsichtlich der Koinzidenz eines bestimmten Markers im Vergleich zu übrigbleibenden Markern zu erhalten, wurde für jeden Marker ein korrespondierendes Histogrammm berechnet. Es wurde die absolute Anzahl der Zellen, die mit diesem ausgewählten Marker fluoreszierten dargestellt. Es konnte ermittelt werden, dass die absolute Anzahl fluoreszierender Zellen stark variiert. Am dominantesten sind die Marker cd2 und cd4. Lymphozyten, die mit dem Marker cd19 fluoreszenzmarkiert sind, treten selten auf und koinzidieren nur einmal mit einem anderen Marker (cd2). Dies bedeutet, dass dieser Marker hochgradig selektiv ist. Eine starke Koinzidenz kann beispielsweise auch zwischen den Paaren (cd2, cd8), (cd3, cd8) und (cd2, cd3) beobachtet werden.

In dem beschriebenen Ausführungsbeispiel wurden Mikroskopbilder von einem einzigen visuellen Feld aufgezeichnet und analysiert. Ist eine große Anzahl mehrerer hundert visueller Bilder gegeben, dann ist es mit dem erfindungsgemäßen Verfahren möglich, innerhalb einer relativ kurzen Zeit eine präzise statistische Analyse derjenigen Immunzellen-Untergruppen, welche die Steilen im Gewebe penetriert haben, vorzulegen.

**Patentansprüche**

1. Verfahren zur automatischen Analyse von Mikroskopaufnahmen von biologischen Objekten, insbesondere zur Analyse von Fluoreszenzaufnahmen von Zellen, wobei
das Verfahren folgende Schritte umfasst:

a) Aufnahme von mindestens zwei Mikroskopbildem einer Probe mit einer Vielzahl von biologischen Objekten;
b) Auswahl eines ersten Mikroskopbildes und Markierung der Position von Masseschwerpunkten einer Anzahl n der einzelnen in dem ersten Mikroskopbild erkennbaren Objekte, wobei jedem markierten Objekt ein definierter erster Bildausschnitt zugeordnet wird, der das markierte Objekt jeweils vollständig umgibt und wobei jedem ersten Bildausschnitt mit einem markierten Objekt der Wert 1 zugeordnet wird und die Anzahl n von derart markierten ersten Bildausschnitten ein positives Trainingsset ergibt;
c) Auswahl und Markierung einer Anzahl m von zweiten Bildausschnitten, die zu den ersten Bildausschnitten jeweils einen vorbestimmten Mindestabstand einhalten, wobei die Größe und Form eines zweiten Bildausschnitts der Größe und Form des ersten Bildausschnitts entspricht und wobei jedem zweiten Bildausschnitt der Wert 0 zugeordnet wird und die Anzahl m von derart markierten zweiten Bildausschnitten ein negatives Trainingsset ergibt;
d) Ermittelung charakteristischer Merkmale und/oder Merkmalskombinationen des positiven und negativen Trainingssets und Zuordnung zu einem Klassifikationswert zwischen 0 und 1, wobei der Klassifikationswert den Grad der Wahrscheinlichkeit des Vorhandenseins eines markierten Objekts repräsentiert und Speicherung der ermittelten Merkmale und/oder Merkmalskombinationen;
e) Automatische Ermittelung von Klassifikationswerten von allen Bildpunkten des zweiten und jedes weiteren Mikroskopbildes mittels eines Vergleichs der Bilddaten des zweiten und jeden weiteren Mikroskopbildes mit den in Verfahrensschritt d) ermittelten Merkmalen und/oder Merkmalskombinationen, wobei für jeden Bildpunkt des zweiten und jedes weiteren Mikroskopbildes der Klassifikationswert für einen den Bildpunkt umgebenden Bildausschnitt ermittelt wird und die Größe und Form dieses Bildausschnitts der Größe und Form des ersten oder zweiten Bildausschnitts entspricht; und
f) Erkennung der Position von biologischen Objekten in dem zweiten oder jedem weiteren Mikroskopbild durch Auswertung der ermittelten Klassifikationswerte, wobei die ermittelten Klassifikationswerte mit einem vorgegebenen Schwellenwert verglichen werden, der das Vorhandensein eines biologischen Objekts repräsentiert.

2. Verfahren nach Anspruch 1,
**dadurch gekennzeichnet,**
**daß** die Probe eine Gewebeprobe und das biologische Objekt eine Zelle ist.

3. Verfahren nach Anspruch 1 oder 2,
**dadurch gekennzeichnet,**
**daß** die zu ermittelnden biologischen Objekte vor der Aufnahme der Mikroskopbilder mit einem oder mehreren chemischen Markern markiert werden.

4. Verfahren nach Anspruch 3,
**dadurch gekennzeichnet,**
**daß** die zu ermittelten Objekte vor der Aufnahme der Mikroskopbilder mit mehreren chemischen Markern markiert werden, wobei zwischen der Aufnahme der einzelnen Mikroskopbilder ein Bleich- oder Waschvorgang durchgeführt wird.

5. Verfahren nach Anspruch 3 oder 4,
**dadurch gekennzeichnet,**
**daß** die chemischen Marker Fluorochrommarker und die Mikroskopbilder Fluoreszenzaufnahmen sind.

6. Verfahren nach einem der vorhergehenden Ansprüche,
**dadurch gekennzeichnet,**
**daß** die Mikroskopbilder mittels einer CCD-Kamera aufgenommen und digitalisiert werden.

**7.** Verfahren nach einem der vorhergehenden Ansprüche,
**dadurch gekennzeichnet,**
**daß** die Anzahl n der einzelnen in dem Verfahrensschritt b) markierten biologischen Objekte größer oder gleich 50 ist.

**8.** Verfahren nach einem der vorhergehenden Ansprüche,
**dadurch gekennzeichnet,**
**daß** der erste Bildausschnitt quadratisch ausgebildet ist, wobei die Größe bzw. die Seitenlänge des ersten Bildausschnitts mindestens dem maximalen Durchmesser der biologischen Objekte im ersten Mikroskopbild entspricht.

**9.** Verfahren nach einem der vorhergehenden Ansprüche,
**dadurch gekennzeichnet,**
**daß** die Anzahl m von zweiten Bildausschnitten größer oder gleich 50 ist, wobei die zweiten Bildausschnitte automatisch unter Berücksichtigung des Mindestabstands zu den jeweiligen ersten Bildausschnitten definiert werden.

**10.** Verfahren nach einem der vorhergehenden Ansprüche,
**dadurch gekennzeichnet,**
**daß** die automatische Ermittelung von Klassifikationswerten von allen Bildpunkten des zweiten und jedes weiteren Mikroskopbildes gemäß Verfahrensschritt e) durch ein Scannen der Bildfläche des zweiten und jedes weiteren Mikroskopbildes erfolgt.

**11.** Verfahren nach einem der vorhergehenden Ansprüche,
**dadurch gekennzeichnet,**
**daß** der Schwellenwert des Klassifikationswerts, der das Vorhandensein eines biologischen Objekts repräsentiert, mindestens 0,5 beträgt.

**12.** Verfahren nach einem der vorhergehenden Ansprüche,
**dadurch gekennzeichnet,**
**daß** die durch die Verfahrensschritte a) bis f) ermittelten Objektpositionen in der Gesamtzahl der Mikroskopbilder verglichen werden, so daß sich eine räumliche Lagebestimmung und Verteilung der Einzelobjekte in der Probe ergibt.

**13.** Verwendung eines Verfahrens gemäß dem Anspruch 1 zur automatisierten Zellklassifikation von fluoreszierenden Zellen.

**Claims**

**1.** A method for the automatic analysis of microscope images of biological objects, in particular for the analysis of fluorescence images of cells, comprising the following steps:

a) taking at least two microscope images of a sample including a plurality of biological objects;

b) selecting a first microscope image and marking the position(s) of mass gravity centers of a number n of the individual objects discernible in the first microscope image, in which step each marked object is assigned a defined first image excerpt which completely surrounds the marked object, and each first image excerpt including a marked object is assigned the value 1, with the number n of such marked first image excerpts constituting a positive training set;

c) selecting and marking a number m of second image excerpts each spaced a predetermined minimum distance from said first image excerpts, with a second image excerpt corresponding in size and shape to said first image excerpt, in which step each second image excerpt is assigned the value 0, with the number m of such marked second image excerpts constituting a negative training set;

d) determine characteristic features and/or feature combinations of the positive and negative training sets and assigning said characteristic features and/or feature combinations to a classification value between 0 and 1, said classification value representing the degree of probability of the presence of a marked object, and the determined features and/or feature combinations are stored;

e) determine classification values of all image points of the second and each further microscope image by comparing the image data of the second and each further microscope image with the features and/or feature combinations determined in procedural step d), in which step, for each image point of the second and each further microscope image, the classification value for an image excerpt surrounding the image point is determined and the size and shape of this image excerpt corresponds to the size and shape of the first or second image excerpt; and

f) recognizing the position(s) of biological objects in the second or each further microscope image by evaluating the determined classification values, in which step the determined classification values are compared with a given threshold value representing the presence of a biological object.

**2.** The method as claimed in claim 1 wherein the sample is a tissue sample and the biological object is a cell.

**3.** The method as claimed in claims 1 or 2 wherein the biological objects to be determined are marked with one or plural chemical markers before the microscope images are taken.

**4.** The method as claimed in claim 3 wherein the objects to be determined are marked with one or plural chemical markers before the microscope images are taken, with a bleaching or rinsing procedure being performed between the taking of the individual microscope images.

**5.** The method as claimed in claims 3 or 4 wherein said chemical markers are fluorochrome markers and the microscope images are fluorescence images.

**6.** The method as claimed in claim 1 wherein the microscope images are taken by a CCD camera and then digitized.

**7.** The method as claimed in claim 1 wherein the number n of the individual biological objects marked in procedural step b) is larger than or equal to 50.

**8.** The method as claimed in claim 1 wherein the first image excerpt is of square shape, with the size and/or side length of the first image excerpt corresponding at least to the maximum diameter of the biological objects in the first microscope image.

**9.** The method as claimed in claim 1 wherein the number m of second image excerpts is larger than or equal to 50, with the second image excerpts being defined automatically, keeping to the minimum distance from the respective first image excerpts.

**10.** The method as claimed in claim 1 wherein classification values of all image points of the second and each further microscope image are automatically determined according to procedural step e) by scanning the image surface of the second and each further microscope image.

**11.** The method as claimed in claim 1 wherein the threshold value of the classification value representing the presence of a biological object is at least 0.5.

**12.** The method as claimed in claim 1 wherein the object positions determined by procedural steps a) to f) are compared in the total number of microscope images so as to obtain a spatial location and distribution of the individual objects in the sample.

**13.** Use of a method as claimed in claim 1 for the automatic cell classification of fluorescent cells.

**Revendications**

**1.** Procédé d'analyse automatique d'images prises au microscope d'objets biologiques, destiné notamment à l'analyse d'images à fluorescence de cellules, le procédé comportant les étapes suivantes:

a) Prise d'au moins deux images au microscope d'un échantillon comportant une multitude d'objets biologiques;

b) sélection d'une première image prise au microscope et marquage de la position des centres de gravité de masse d'un nombre n des différents objets reconnaissables sur la première image prise au microscope, à chacun des objets marqués étant affecté un premier extrait d'image défini qui entoure complètement l'objet marqué et à chaque premier extrait d'image comportant un objet marqué étant attribué la valeur 1, et le nombre n des premiers extraits d'image marqués de la sorte donnant un kit d'entraînement positif;

c) sélection et marquage d'un nombre n de deuxièmes extraits d'image respectant une distance minimale prédéterminée par rapport aux premiers extraits d'image, la taille et la forme d'un deuxième extrait d'image correspondant à la taille et la forme du premier extrait d'image et à chacun des deuxièmes extraits d'image étant attribué la valeur 0, et le nombre m des deuxièmes extraits d'image marqués de la sorte donnant un kit d'entraînement négatif;

d) détermination des, caractéristiques et/ou des combinaisons de, caractéristiques des kits d'entraînement positif et négatif et attribution d'une valeur de classification comprise entre 0 et 1, la valeur de classification représentant le degré de probabilité de présence d'un objet marqué, et mémorisation des, caractéristiques et/ou combinaisons de, caractéristiques déterminées;

e) détermination automatique de valeurs de classification de la totalité des pixels de la deuxième et de chaque image supplémentaire prise au microscope par comparaison des données-image de la deuxième et de chaque image supplémentaire prise au microscope avec les, caractéristiques et/ou les combinaisons de, caractéristiques déterminées lors de l'étape du procédé d), pour chaque pixel de la deuxième et de chaque autre image prise au microscope, la valeur de classification étant déterminée pour un extrait d'image entourant le pixel, les taille et forme dudit extrait d'image correspondant aux taille et forme du premier ou du deuxième extrait d'image; et

f) détection de la position d'objets biologiques sur la deuxième ou chaque autre image prise au microscope par dépouillement des valeurs de classification déterminées, les valeurs de classification étant comparées à un seuil donné représentant la présence d'un objet biologique.

**2.** Procédé selon la revendication 1, **caractérisé en ce que** l'échantillon est un prélèvement tissulaire et l'objet biologique une cellule.

**3.** Procédé selon la revendication 1 ou 2, **caractérisé en ce que** les objets biologiques à déterminer sont marqués à l'aide d'un ou de plusieurs marqueurs chimiques préalablement à la prise des images au microscope.

**4.** Procédé selon la revendication 3, **caractérisé en ce que** préalablement à la prise des images au microscope, les objets à déterminer sont marqués à l'aide de plusieurs marqueurs chimiques, une opération de blanchiment et de lavage ayant lieu entre la prise des différentes images au microscope.

**5.** Procédé selon la revendication 3 ou 4, **caractérisé en ce que** les marqueurs chimiques sont des marqueurs fluorochromes et les images prises au microscope des images à fluorescence.

**6.** Procédé selon l'une des revendications précédentes, **caractérisé en ce que** les images au microscope sont prises et numérisées à l'aide d'une caméra CCD.

**7.** Procédé selon l'une des revendications précédentes, **caractérisé en ce que** le nombre n des différents objets biologiques marqués lors de l'étape du procédé b) est supérieur ou égal à 50.

**8.** Procédé selon l'une des revendications précédentes, **caractérisé en ce que** le premier extrait d'image a une forme quadratique, la taille ou la longueur latérale du premier extrait d'image correspondant au moins au diamètre maximal des objets biologiques présents sur la première image prise au microscope.

**9.** Procédé selon l'une des revendications précédentes, **caractérisé en ce que** le nombre m des deuxièmes extraits d'image est supérieur ou égal à 50, les deuxièmes extraits d'image étant définis de manière automatique en tenant compte de la distance minimale par rapport aux premiers extraits d'image.

**10.** Procédé selon l'une des revendications précédentes, **caractérisé en ce que** la détermination automatique des valeurs de classification de tous les pixels de la deuxième et de chaque image supplémentaire prise au microscope intervient selon l'étape du procédé e) à l'aide d'un scanning de la surface d'image de la deuxième et de chaque image supplémentaire prise au microscope.

**11.** Procédé selon l'une des revendications précédentes, **caractérisé en ce que** le seuil de la valeur de classification représentant la présence d'un objet biologique est de 0,5 au minimum.

**12.** Procédé selon l'une des revendications précédentes, **caractérisé en ce que** les positions d'objet déterminées lors des étapes du procédé a) à f) sont comparées sur le nombre total des images prises au microscope de manière à déterminer une position dans l'espace et une répartition des objets individuels présents dans l'échantillon.

**13.** Utilisation d'un procédé selon la revendication 1 pour la classification automatisée des cellules fluorescentes.